# EUROPEAN PATENT SPECIFICATION

(11) **EP 1 749 433 B1**
(45) Date of publication and mention of the grant of the patent: **08.10.2008**
(21) Application number: 06118271.3
(22) Date of filing: 01.08.2006
(51) Int. Cl.: A01D 34/74

(54) **Improvements in or relating to lawncare apparatus**
Verbesserungen bei Rasenpflegegeräten
Perfectionnements aux appareils de traitement de gazon

(30) Priority: 02.08.2005 GB 0515838
(43) Date of publication of application: 07.02.2007
(73) Proprietor: ROBERT BOSCH GMBH, 70469 Stuttgart (DE)
(72) Inventor: Quigley, Andrew, Stowmarket, Suffolk IP14 1EY (GB); Coussins, Adrian, Stowmarket, Suffolk IP14 1EY (GB)
(74) Representative: Bailey, David Martin

(56) References cited:
- DE-C1- 19 516 634
- FR-A- 2 079 308
- US-A- 4 321 785
- US-A- 5 230 208
- US-A1- 2005 005 588

## Description

The present invention relates to improvements in or relating to lawncare apparatus. In particular, it relates to apparatus for adjusting the working height of a lawncare machine.

For example, the invention may be embodied in a lawnmower having apparatus to adjust the height-of-cut thereof. To change the height-of-cut of a lawnmower, the front, rear or both sets of ground-engaging wheels or rollers are conventionally raised or lowered relative to the deck that supports the motor or engine driving the rotary cutting element.

In one known arrangement, the mower includes front and rear axles connected by a link, and either the link itself or one of the front/rear axles is then connected to the deck, for example by means of an additional lever which can be engaged with the deck in a number of alternative positions.

US-A-5 230 208 discloses a lawncare apparatus according to the preamble of claim 1.

GB 2 367 475 describes a lawn care machine having front and rear wheels joined by respective front and rear axles, the axles being connected at each end to respective links having openings for receiving the front and rear axles. A height adjustment arrangement includes an arm with a releasably engageable mechanism to provide alternative positions to vary the height of a working tool above the ground. The height adjustment means deforms laterally to allow engagement and disengagement of arm. A counterweight spring provides a bias to offset the static weight of the machine, so enabling easy height adjustment.

However, such an arrangement is comparatively complex and expensive. Accordingly, there is a demand for cheaper arrangements. In one such arrangement, two sets of a plurality of vertically spaced slots are provided on either side of a portion of the underside of the front of the deck of the lawnmower to engage the axle of the front wheels. The axle is biased into engagement with the slots, suitably by means of a spring. To adjust the height-of-cut the axle is pulled out of engagement with the slots in which it rests, is moved vertically and then allowed to engage with an alternative pair of slots. Similar arrangements can be provided for the rear wheels.

However, such an arrangement is very fiddly in use as the user cannot readily see what they are doing without turning the lawnmower over.

Accordingly, there is a need for an improved simple height of cut system.

According to the invention there is provided, in its broadest sense, a lawncare apparatus having a working height which is adjustable with respect to the ground upon which the apparatus will be used. The lawncare apparatus comprises a chassis, at least one axle defining a first axis, the axle having first and second axle ends, and a wheel mounted for rotation at each of said first and second axle ends; wherein each of said first and second axle ends is carried by a respective adjustment member mounted for rotation about a respective second axis upon the chassis of the machine, wherein the second axis is non-coaxial with the first axis.

Preferably, the adjustment member and main body include inter-cooperating detent or index means. Suitably, the detent means includes an arcuately spaced series of apertures sequentially engagable, in use, by a mating projection on the adjustment member.

Preferably, each axle is mounted for pivotal movement about the second axis within an arcuate slot in the chassis.

Preferably, the arcuate slot defines an arc of 90 -140°, preferably about 100-130°, more preferably about 110-120°.

Preferably, each adjustment member is independently releasably lockable to allow or prevent pivoting of the first axis about the second axis.

Suitably, the adjustment member and chassis include inter-cooperating detent or index means.

Preferably, the detent means includes an arcuately spaced series of apertures formed in a chassis of the apparatus.

Preferably, the adjustment member is provided with a projection adapted for mating engagement with an aperture of the arcuate series of spaced apertures.

Preferably, the adjustment member is retainable for rotation on the chassis by means of a bayonet mounting.

Preferably, the adjustment member includes an adjustment lever.

Preferably, the adjustment member includes at least one axle-receiving aperture.

Preferably, the adjustment member includes two axle-receiving aperture in an opposed spatial arrangement about the second axis.

Preferably, the or each axle-receiving aperture is generally cylindrical.

Preferably, the or each axle-receiving aperture includes a proximal portion adjacent a body of the adjustment member and a distal portion remote the body of the adjustment member, wherein the proximal portion includes a portion having a narrower diameter than the distal portion.

Typically, the lawncare apparatus comprises two axles, a front axle and a rear axle.

Preferably, the or each axle is substantially straight.

Most suitably, the lawncare apparatus is in the form of a lawnmower or scarifier.

The above and other aspects of the present invention will now be described in further detail, by way of example only, with reference to the accompanying drawings, in which;
Figure 1 is a front left-side perspective view of an embodiment of a lawncare apparatus in accordance with the present invention in the form of a lawnmower;
Figure 2 is a front left-side exploded perspective view of the chassis of the lawnmower of Figure 1 having wheels partially assembled thereon;
Figure 3 is a enlarged view of the ringed section in Figure 1;
Figure 4 is a rear right-side perspective view of the lawnmower chassis of Figure 2 having wheels partially assembled thereon;
Figure 5 is an enlarged view of the ringed section in Figure 3;
Figure 6 is a front perspective of the adjustment member of the lawnmower of Figure 1;
Figure 7 is a rear perspective of the adjustment member of Figure 6;
Figure 8 is a sectional view along the line xiii-xiii of Figure 6 including an enlarged part view thereof;
Figure 9 is the enlarged view of Figure 8 taken in combination with an axle;
Figure 10 is a side elevation of a left-front mounting point of the chassis of Figure 2; and
Figure 11 is a side elevation of a left-rear mounting point of the chassis of Figure 2.

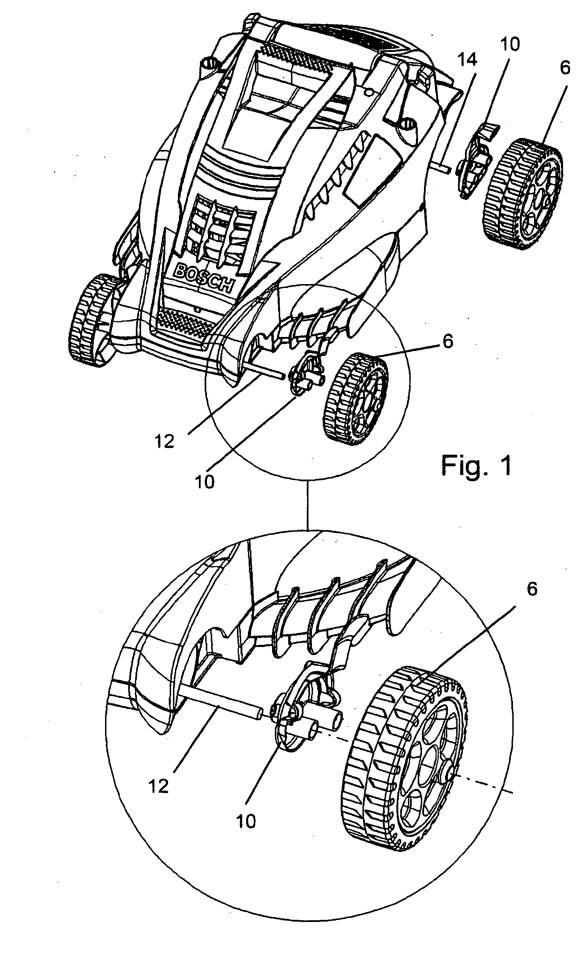

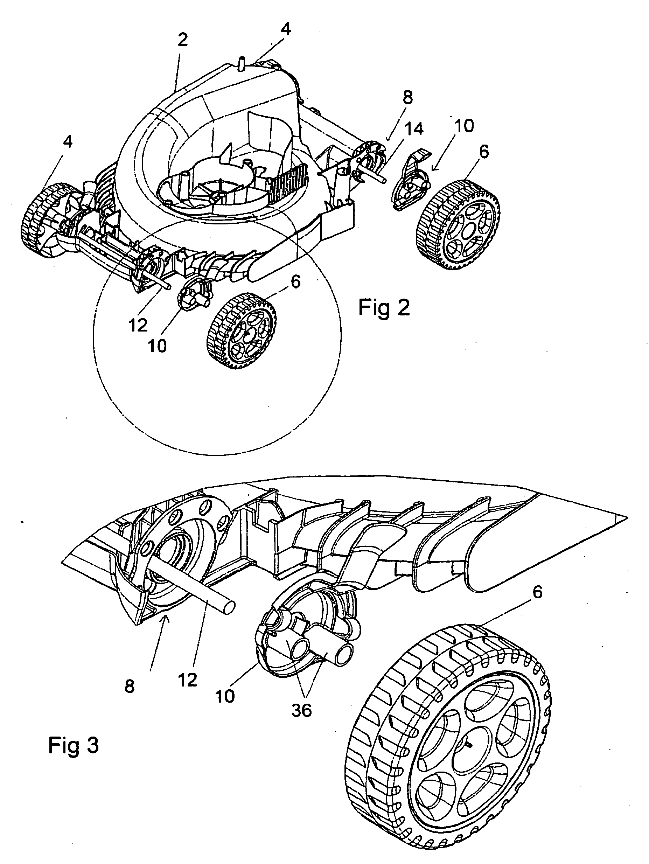

Figures 1 and 2 show a lawnmower having a lawnmower chassis 2 having right hand wheels 4 fitted thereto and left hand wheels 6 shown ready for assembly. In use, but for clarity not shown, a prime mover, typically an electric motor or a small petrol engine, is mounted on the upper side of the chassis, and includes a direct drive shaft or indirect drive arrangement including a drive shaft, upon which shaft is mounted for rotation about a vertical axis a cutting blade.

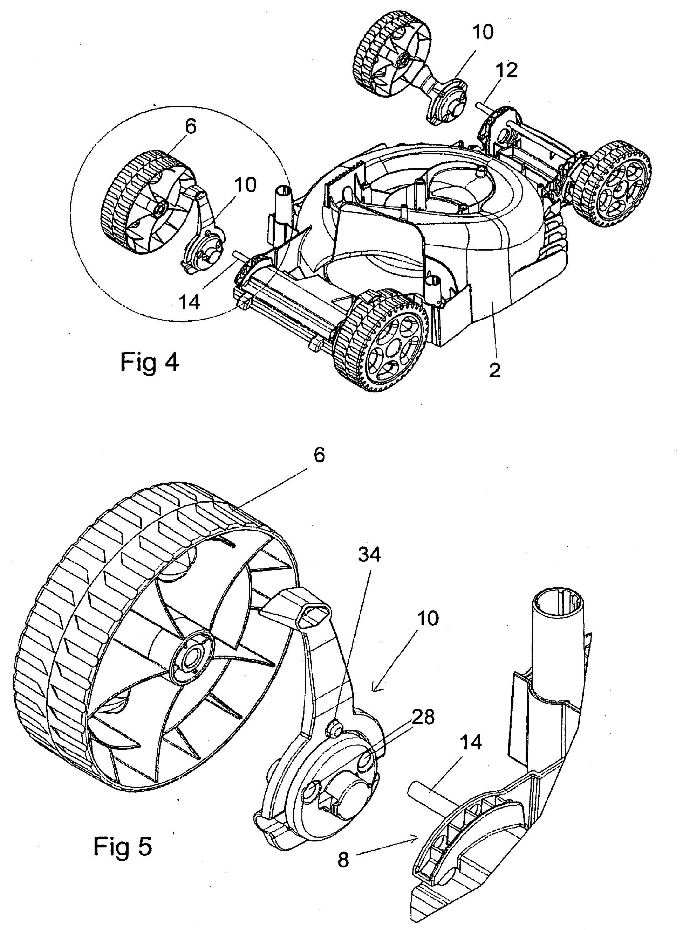

The apparatus for raising and lowering the chassis of the lawnmower in relation to the ground-engaging surface of wheels 4, 6 is shown in detail in Figures 2 to 5. It will be understood that the inventive arrangement can be carried out in manners other than described in this embodiment and that the orientation and size of the components can be adjusted without departing from the invention.

Referring to Figures 2 to 5, four mounting points 8 are provided on the chassis. Each of the mounting points is associated with one of the wheels 4, 6. Four adjustment members 10 are provided, each associated with a respective mounting point. Substantially straight front axle 12 and rear axle 14 each join laterally opposed left and right wheels 4, 6.

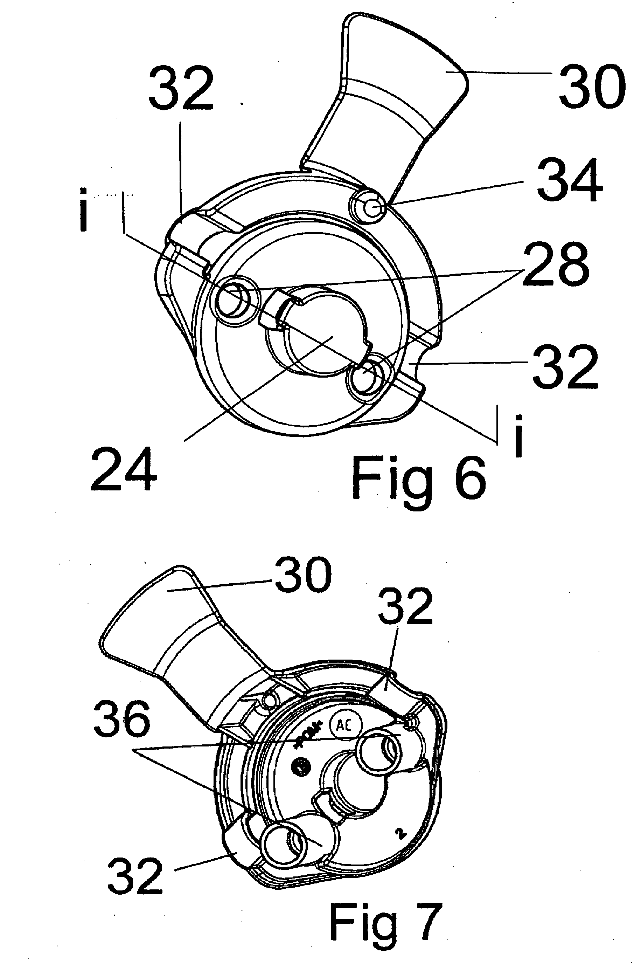

Each adjustment member 10, the features of which can be seen more clearly in Figures 6 to 8, is provided with a male bayonet fitting 24 defining a first axis about which the adjustment member rotates. Each is also provided with two opposed non-axial openings 28 each adapted to accept an axle 12, 14. A protrusion 34 is provided on an operatively upper edge and biased in the direction of the mounting point 8 by biasing means. In the illustrated embodiment, the biasing means includes a pair of joined resilient arms 32. Arms 32 are widely spaced so as to provide high load carrying and stiffness values in resisting rotation of adjustment member 10 in mounting point 8. Arms 32 and/or the whole adjustment member are suitably moulded from a flexible and resilient plastics material such as an acetal homopolymer or copolymer. It will be clear to those skilled in the art that other materials and alternative biasing means are equally suitable.

The adjustment member 10 also includes a lever 30. The lever 30 manipulates, in use, the resilient arm 32 in order to pull the protrusion away from the mounting point 8 and is also used to effect rotation of the adjustment member 10.

The adjustment member 10 is positioned so that one of the off-centre openings 28 is located in line with the arcuate slot 18. Axle 12, 14 is passed through the arcuate slot 18 and through the off-centre opening 28 so that an end of the axle 12, 14 protrudes from the tube 36. A wheel 4, 6 is then mounted on the axle. The wheel is mounted on the axle in a conventional manner. Passage of axles 12,14 through arcuate slot 18 limits rotation of adjustment member 10 and hence defines a range of height adjustment at each wheel. This also ensures that adjustment member 10 remains consistently assembled to mounting point 8 as the angular position for connection and disconnection of the bayonet fixing can only be reached with axles 12,14 removed.

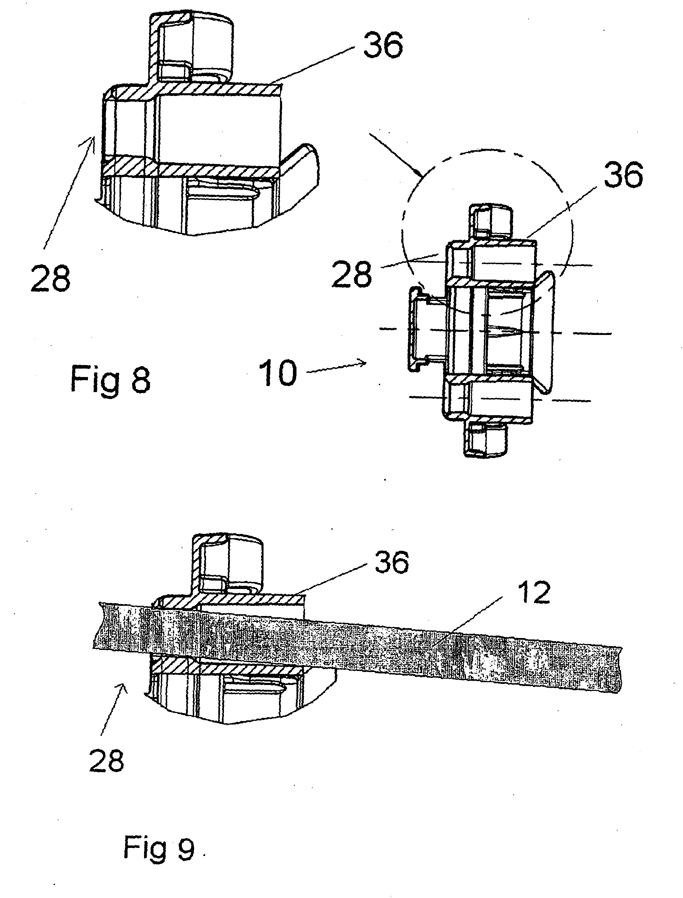

Each of the openings 28 for accepting an axle has an open ended tube 36 extending therefrom. The bore of each tube 36 varies along its length. As shown in Figure 8 the opening 28 and a portion of the length of the tube 36 directly behind it has a smaller bore than the rest of the tube 36. This allows the axle 12, 14 a degree of pivoting movement within the tube 36 as shown in Figure 9, thus permitting independent adjustment of wheels at either end of the same axle, in the course of which, for example, one wheel might be at its highest point with the other at its lowest.

The length of tube 36 is selected to provide the correct lateral spacing for the wheels without the complexity of other spacing materials.

By providing two axle-receiving openings 28 diametrically opposed to one another across the adjustment member 10, a common adjustment member 10 can be used on both the left and right mounting points 8, with a consequential reduction in the cost of production. The left hand opening 28 is used on one side of the lawnmower (in the embodiment shown, on the right hand side of the lawnmower) and the right hand opening on the other side. If only one opening 28 is provided then the adjustment members 10 become left and right specific, but it will be clear that such specific left/right adjustment members are equally suitable to perform the height-of-cut adjusting procedure.

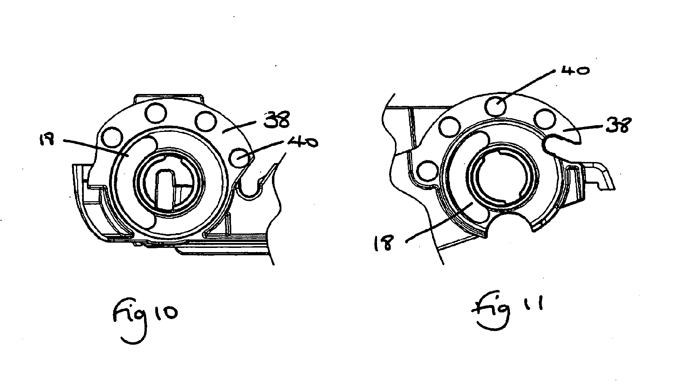

Figures 10 and 11 show side elevations of the left front and left rear mounting points respectively. Arcuate slots 18 are provided and are sized and shaped to allow the axle 12, 14 of their associated wheel to pass through and to act as a guide and travel limit for movement of the axles 12, 14 as well as preventing rotation of an adjustment member 10 to the position at which its bayonet connection to mounting point 8 could be released. Suitably, arcuate slot 18 provides a channel for movement over an arc of 90-140°, preferably about 100-130°, more preferably about 110-120°, providing a typical axle movement range of 30-50mm, preferably around 40mm. For an optimised compact design, but offering accurate and secure retention of height-setting, the radius of travel of protrusions 34 should preferably be greater than that of arcuate slot 18 by a ratio of from 1.5 to 1.9 preferably about 1.7.

The female part of a bayonet fitting 20 is provided on each mounting point 8 and is adapted to engage with the male bayonet mounting 24 provided on one of the adjustment members 10. In this manner the adjustment member is rotatably mounted on the mounting point 8. Alternative means for rotatably mounting the adjustment member onto the mounting point are equally suitable. However, a bayonet fitting offers ease of assembly and disassembly.

An arcuate wall 38 having a plurality of openings 40 is provided on each mounting point 8. The openings 40 are positioned and dimensioned to engage the protrusion 34 provided on the adjustment member 10. As previously described, the protrusion 34 is biased in the direction of the mounting point and in consequence is biased into engagement with the openings 40. When the protrusion 34 is engaged with one of the openings, the adjustment member is locked from rotational movement. In this manner the series of openings 40 represent a number of rotational positions at which the adjustment member 10 may be locked from rotational movement. Other forms of locking mechanism may be used.

As the adjustment member 10 is rotated the axle 12, 14 is moved along the arcuate slot 18 and the height of the wheel 4, 6 in relation to the deck and thus the cutting blade changes. By engaging the locking mechanism of the protrusion 34 and the openings 40 in the arcuate wall 38 the adjustment member 10 is prevented from rotating and the wheel 4, 6 is locked at a particular height in relation to the chassis or main body and thus the cutting blade of the lawnmower. In an overload situation where, for example, the machine has been dropped, protrusion 34 can flex out of opening 40 into which it has been engaged and allow adjustment member 10 to rotate until the axle reaches the end of arcuate slot 18. Loads then pass directly to the main deck of the mower without the risk of breaking adjustment member 10.

A particular advantage arising from the use of a single, full-length, substantially straight axle between each pair of wheels is the manner in which this supports the deck evenly between both sides. Alternative solutions involving the use of stub axles only, of necessity, impose high outward twisting forces to the local deck structure at each corner where the wheels are mounted. The present, inventive, solution therefore enables a lower cost of deck construction whilst still delivering a robust overall solution.

Although described with reference to a rotary lawnmower, the apparatus of the present invention is equally applicable to other lawncare apparatus, such as cylinder lawnmowers and lawn scarifiers.

## Claims

1. A lawncare apparatus comprises a chassis (2), at least one axle defining a first axis (12,14), the axle having first and second axle ends, and a wheel (6) mounted for rotation at each of said first and second axle ends; wherein each of said first and second axle ends is carried by a respective adjustment member (10) mounted for rotation about a respective second axis (24) upon the chassis of the machine, **characterised in that** the second axis is non-coaxial with the first axis.

2. A lawncare apparatus as claimed in Claim 1 wherein each axle is mounted for pivotal movement about the second axis within an arc of 90 -140°, preferably about 100-130°, more preferably about 110-120°.

3. A lawncare apparatus as claimed in Claim 2 wherein the arc is defined by an arcuate slot (18) in the chassis.

4. A lawncare apparatus as claimed in any preceding claim wherein each adjustment member (10) is independently releasably lockable to allow or prevent pivoting of the first axis about the second axis.

5. A lawncare apparatus as claimed in any preceding claim wherein the adjustment member (10) and chassis (2) include inter-cooperating detent or index means.

6. A lawncare apparatus as claimed in Claim 5 wherein the detent means includes an arcuately spaced series of apertures (40) formed in a chassis (2) of the apparatus.

7. A lawncare apparatus as claimed in Claim 5 or Claim 6 wherein the adjustment member is provided with a projection (34) adapted for mating engagement with an aperture of the arcuate series of spaced apertures (40).

8. A lawncare apparatus as claimed in any preceding claim wherein the adjustment member (10) is retainable for rotation on the chassis by means of a bayonet mounting (24).

9. A lawncare apparatus as claimed in any preceding claim wherein the adjustment member includes an adjustment lever (30).

10. A lawncare apparatus as claimed in any preceding claim wherein the adjustment member (10) includes at least one axle-receiving aperture (28).

11. A lawncare apparatus as claimed in Claim 10 wherein the adjustment member (10) includes two axle-receiving apertures (28) in an opposed spatial arrangement about the second axis.

12. A lawncare apparatus as claimed in Claim 10 or Claim 11 wherein the or each axle-receiving aperture (28) is generally cylindrical.

13. A lawncare apparatus as claimed in Claim 12 wherein the or each axle-receiving aperture (28) includes a proximal portion adjacent a body of the adjustment member and a distal portion remote the body of the adjustment member, wherein the proximal portion includes a portion having a narrower diameter than the distal portion.

14. A lawncare apparatus as claimed in any preceding claim comprising two axles, a front axle (12) and a rear axle (14).

15. A lawncare apparatus as claimed in any preceding claim wherein the or each axle is substantially straight.

16. A lawncare apparatus as claimed in any preceding claim in the form of a lawnmower or scarifier.

## Patentansprüche

1. Ein Rasenpflegegerät umfasst ein Fahrgestell (2), mindestens eine Radachse, die eine erste Achse (12, 14) definiert, wobei die Radachse ein erstes und ein zweites Radachsenende besitzt, sowie ein Rad (6), das so angebracht ist, dass es sich an jedem der besagten ersten und zweiten Radachsenenden dreht; wobei jedes der besagten ersten und zweiten Radachsenenden von einem zugehörigen Einstellelement (10) getragen wird, das so angebracht ist, dass es sich um eine zugehörige zweite Achse (24) auf dem Fahrgestell des Geräts dreht, **dadurch gekennzeichnet, dass** die zweite Achse nicht-koaxial mit der ersten Achse ist.

2. Rasenpflegegerät nach Anspruch 1, worein dass jede Radachse so angebracht ist, dass sie sich in einem Bogen von 90-140°, vorzugsweise um 100-130°, noch bevorzugter um 110-120° in einer drehenden Bewegung um die zweite Achse bewegt.

3. Rasenpflegegerät nach Anspruch 2, worein dass der Bogen durch einen bogenförmigen Schlitz (18) in dem Fahrgestell definiert wird.

4. Rasenpflegegerät nach einem der vorhergehenden Ansprüche, worein dass jedes Einstellelement (10) unabhängig lösbar arretierbar ist, um das Drehen der ersten Achse um die zweite Achse zuzulassen oder zu verhindern.

5. Rasenpflegegerät nach einem der vorhergehenden Ansprüche, worein dass das Einstellelement (10) und das Fahrgestell (2) ein zusammenwirkendes Arretier- oder Rastmittel aufweisen.

6. Rasenpflegegerät nach Anspruch 5, worein dass das Arretiermittel eine bogenförmig beabstandete Reihe von Öffnungen (40) aufweist, die in einem Fahrgestell (2) des Geräts gebildet werden.

7. Rasenpflegegerät nach Anspruch 5 oder Anspruch 6, worein dass das Einstellelement mit einem Vorsprung (34) versehen ist, der so angepasst ist, dass er verbindend in eine Öffnung der bogenförmigen Reihe von beabstandeten Öffnungen (40) eingreift.

8. Rasenpflegegerät nach einem der vorhergehenden Ansprüche, worein dass das Einstellelement (10) zur Drehung mittels einer Bajonettkupplung (24) an dem Fahrgestell gehalten werden kann.

9. Rasenpflegegerät nach einem der vorhergehenden Ansprüche, worein dass das Einstellelement einen Einstellhebel (30) aufweist.

10. Rasenpflegegerät nach einem der vorhergehenden Ansprüche, worein dass das Einstellelement (10) mindestens eine radachsenaufnehmende Öffnung (28) aufweist.

11. Rasenpflegegerät nach Anspruch 10, worein dass das Einstellelement (10) zwei radachsenaufnehmende Öffnungen (28) in einer gegenüberliegenden räumlichen Anordnung um die zweite Achse aufweist.

12. Rasenpflegegerät nach Anspruch 10 oder Anspruch 11, worein dass die oder dass jede radachsenaufnehmende Öffnung (28) im Allgemeinen zylindrisch ist.

13. Rasenpflegegerät nach Anspruch 12, worein dass die oder dass jede radachsenaufnehmende Öffnung (28) einen proximalen Abschnitt angrenzend an einen Körper des Einstellelements sowie einen distalen Abschnitt entfernt vom Körper des Einstellelements aufweist, wobei der proximale Abschnitt einen Abschnitt aufweist, der einen kleineren Durchmesser als der distale Abschnitt besitzt.

14. Rasenpflegegerät nach einem der vorhergehenden Ansprüche, das zwei Radachsen aufweist, eine vordere Radachse (12) und eine hintere Radachse (14).

15. Rasenpflegegerät nach einem der vorhergehenden Ansprüche, wobei die oder jede Radachse im Wesentlichen gerade ist.

16. Rasenpflegegerät nach einem der vorhergehenden Ansprüche in Form eines Rasenmähers oder Vertikutierers.

## Revendications

1. Appareil d'entretien de gazon comprenant un châssis (2), au moins un essieu définissant un premier axe (12, 14), l'essieu comportant des première et deuxième extrémités d'essieu, et une roue (6) montée en rotation à chacune desdites première et deuxième extrémités d'essieu ; dans lequel chacune desdites première et deuxième extrémités d'essieu est supportée par un élément d'ajustement (10) respectif monté en rotation autour d'un deuxième axe (24) respectif sur le châssis de la machine, **caractérisé en ce que** le deuxième axe n'est pas coaxial avec le premier axe.

2. Appareil d'entretien de gazon selon la revendication 1, dans lequel chaque essieu est monté pour effectuer un mouvement de pivotement autour du deuxième axe selon un arc de 90 à 140°, de préférence d'environ 100 à 130°, plus préférablement d'environ 110 à 120°.

3. Appareil d'entretien de gazon selon la revendication 2, dans lequel l'arc est défini par une fente en forme d'arc (18) dans le châssis.

4. Appareil d'entretien de gazon selon l'une quelconque des revendications précédentes, dans lequel chaque élément d'ajustement (10) peut être verrouillé de façon libérable de manière indépendante pour permettre ou empêcher le pivotement du premier axe autour du deuxième axe.

5. Appareil d'entretien de gazon selon l'une quelconque des revendications précédentes, dans lequel l'élément d'ajustement (10) et le châssis (2) comprennent des moyens d'encliquetage ou d'indexation coopérant mutuellement.

6. Appareil d'entretien de gazon selon la revendication 5, dans lequel les moyens d'encliquetage comprennent une série d'ouvertures (40) espacées selon un arc formées dans un châssis (2) de l'appareil.

7. Appareil d'entretien de gazon selon la revendication 5 ou la revendication 6, dans lequel l'élément d'ajustement est pourvu d'une protubérance (34) adaptée pour une mise en prise d'accouplement avec une ouverture de la série d'ouvertures (40) espacées selon un arc.

8. Appareil d'entretien de gazon selon l'une quelconque des revendications précédentes, dans lequel la rotation de l'élément d'ajustement (10) peut être empêchée sur le châssis au moyen d'une monture à baïonnette (24).

9. Appareil d'entretien de gazon selon l'une quelconque des revendications précédentes, dans lequel l'élément d'ajustement comprend un levier d'ajustement (30).

10. Appareil d'entretien de gazon selon l'une quelconque des revendications précédentes, dans lequel l'élément d'ajustement (10) comprend au moins une ouverture de réception d'essieu (28).

11. Appareil d'entretien de gazon selon la revendication 10, dans lequel l'élément d'ajustement (10) comprend deux ouvertures de réception d'essieu (28) en un agencement spatial opposé autour du deuxième axe.

12. Appareil d'entretien de gazon selon la revendication 10 ou la revendication 11, dans lequel la ou chaque ouverture de réception d'essieu (28) est généralement cylindrique.

13. Appareil d'entretien de gazon selon la revendication 12, dans lequel la ou chaque ouverture de réception d'essieu (28) comprend une partie proximale adjacente à un corps de l'élément d'ajustement et une partie distale éloignée du corps de l'élément d'ajustement, dans lequel la partie proximale comprend une partie ayant un plus petit diamètre que la partie distale.

14. Appareil d'entretien de gazon selon l'une quelconque des revendications précédentes, comprenant deux essieux, un essieu avant (12) et un essieu arrière (14).

15. Appareil d'entretien de gazon selon l'une quelconque des revendications précédentes, dans lequel le ou chaque essieu est sensiblement droit.

16. Appareil d'entretien de gazon selon l'une quelconque des revendications précédentes sous la forme d'une tondeuse à gazon ou d'un scarificateur.
